# EUROPÄISCHE PATENTSCHRIFT

(11) **EP 1 144 307 B1**
(45) Veröffentlichungstag und Bekanntmachung des Hinweises auf die Patenterteilung: **24.03.2004**
(21) Anmeldenummer: 99964570.8
(22) Anmeldetag: 14.12.1999
(51) Int. Cl.: C01B 33/04, B01J 8/02

(54) **VERFAHREN UND ANLAGE ZUR HERSTELLUNG VON SILAN**
METHOD AND SYSTEM FOR PRODUCING SILANE
PROCEDE ET DISPOSITIF PERMETTANT DE PRODUIRE DU SILANE

(30) Priorität: 24.12.1998 DE 19860146
(43) Veröffentlichungstag der Anmeldung: 17.10.2001
(73) Patentinhaber: SolarWorld Aktiengesellschaft, 53113 Bonn (DE)
(72) Erfinder: BLOCK, Hans-Dieter, D-51381 Leverkusen (DE); LEIMKÜHLER, Hans-Joachim, D-51375 Leverkusen (DE); MÜLLER, Dirk, D-51465 Bergisch Gladbach (DE); SCHÄFER, Johannes-Peter, D-51515 Kürten (DE); RONGE, Georg, D-40277 Düsseldorf (DE)
(74) Vertreter: Rau, Albrecht
(86) Internationale Anmeldenummer: PCT/EP1999/009915
(87) Internationale Veröffentlichungsnummer: WO 2000/039027

(56) Entgegenhaltungen:
- EP-A- 0 063 067
- EP-A- 0 093 640
- FR-A- 2 118 725
- FR-A- 2 261 977
- US-A- 4 613 491
- PATENT ABSTRACTS OF JAPAN vol. 011, no. 013 (C-397), 14. Januar 1987 (1987-01-14) & JP 61 191513 A (DENKI KAGAKU KOGYO KK), 26. August 1986 (1986-08-26)

## Beschreibung

Die vorliegende Erfindung betrifft ein kontinuierliches Verfahren zur Herstellung von Silan SiH₄ durch katalytisches Disproportionieren von Trichlorsilan SiHCl₃ zu SiH₄ und Siliciumtetrachlorid SiCl₄. Gegenstand der Erfindung ist auch eine Anlage zur Durchführung des Verfahrens.

SiH₄ ist ein hervorragend geeignetes Ausgangsmaterial, aus dem, gegebenenfalls nach weiterer Reinigung, durch thermische Zersetzung sehr reines Silicium in Halbleiterqualität abgeschieden werden kann. Der Bedarf an Reinst-Silicium wächst stark und damit der Bedarf an reinem Silan, dessen hervorragende Eignung zur Reinst-Silicium-Erzeugung immer mehr erkannt und genutzt wird.

Unter den in der Literatur beschriebenen Verfahren zur Herstellung von Silan ist die Erzeugung aus Trichlorsilan durch Disproportionierung wirtschaftlich vorteilhaft. Bekannt ist es, daß Amine, speziell tertiäre Amine und ihre Hydrochloride und quartäre Ammoniumchloride, sowohl in flüssiger (DE 3 500 318) als auch in fester Form, z.B. an feste Träger gebunden, als Katalysatoren die Disproportionierung des Trichlorsilans in wirtschaftlich vorteilhafter Weise beschleunigen. An feste Träger gebundene Amine (US 4 701 430, US 5 026 533, DE 3 500 318, DE 3 311 650) werden vorzugsweise deshalb eingesetzt, weil damit der Eintrag von verunreinigenden Aminen in die reagierende gasförmig-flüssige Silan-Chlorsilan-Phase vermieden werden kann.

Die in einigen anderen beschriebenen Verfahren gewählten flüssigen Katalysatoren haben den Nachteil, daß sie über die Zeit langsam aus dem Reaktionsteil ausgetragen werden, da sie niemals vollständig von den Reaktionsprodukten abgetrennt werden können. Die mitgeschleppten Katalysatormengen führen in nachfolgenden Verfahrensschritten oder in einem Kreislaufsystem auch in vorgeschalteten Verfahrensschritten zu Problemen, weil sie sich an bestimmten Stellen des Systems sammeln können und dort z.B. unerwünschte Reaktionen katalysieren können. Auch gelingt es mit einem flüssigen Katalysator nicht, diesen möglichst gleichmäßig in der Kolonne zu verteilen, sondern er wird sich aufgrund seines spezifischen Dampfdrucks lokal aufkonzentrieren. Dieses Problem wird durch die in DE 3 500 318 vorgeschlagene Verwendung zweier Katalysatoren mit unterschiedlichen Siedepunkten keinesfalls behoben, sondern allenfalls gemindert.

Es ist auch bereits versucht worden, die nach dem Stand der Technik in mehreren Schritten, beispielsweise in zwei Schritten ablaufende Disproportionierung in einem Schritt nach dem Prinzip der Reaktivdestillation ablaufen zu lassen. Die Reaktivdestillation ist durch Kombination von Reaktion und destillativer Trennung in einem Apparat, insbesondere einer Kolonne gekennzeichnet. Durch die fortlaufende destillative Entfernung der jeweils leichtest siedenden Komponente in jedem Raumelement wird stets ein optimales Gefälle zwischen Gleichgewichtszustand und tatsächlichem Gehalt an leichter siedenden Komponenten bzw. leichtest siedender Komponente aufrecht erhalten, so daß eine maximale Reaktionsgeschwindigkeit resultiert (JP-01 317 114).

Aus der DE 2 507 864 ist ein weiteres Verfahren zur Herstellung von Silan bekannt, das dadurch gekennzeichnet ist, daß man in ein Bett eines im Reaktionsmedium unlöslichen Anionenaustauscherharzes, enthaltend tertiäre Amino- oder quaternäre Ammoniumgruppen an einem Kohlenstoffatom, Trichlorsilan einführt und die Temperatur des Harzbettes so hält, daß Trichlorsilan disproportioniert wird einerseits zu Produkten, die im Bett aufsteigen, und andererseits zu Siliciumtetrachlorid, das kondensiert und zum Kolonnensumpf fließt, und daß man die Temperatur am oberen Teil des Bettes über dem Siedepunkt von Silan und unter dem Siedepunkt von Monochlorsilan hält und das von Chlorsilanen praktisch freie Silan aus dem Bett gewinnt.

Dieses Verfahren zeichnet sich den anderen bekannten Verfahren gegenüber dadurch aus, daß es
(1) apparativ einstufig ist, also Silan und Siliciumtetrachlorid als gewünschte, angereicherte Produkte von verschiedenen Stellen des gleichen Apparates zu entnehmen gestattet, das also mit vergleichsweise geringem apparativen Aufwand und reduziertem Energieeinsatz auskommt, daß es
(2) die Produkte Silan (in Konzentrationen zwischen 96 bis 98 % SiH₄) und Siliciumtetrachlorid (in Konzentrationen z.B. zwischen 70 bis 80 % SiCl₄) in vergleichsweise hoher Konzentration zu erzeugen gestattet, ohne weitere Hilfsaggregate zu benötigen, daß es
(3) dank des festen unlöslichen Katalysators (im weiteren katalytisch wirksamer Feststoff genannt) nur minimalen Eintrag von Verunreinigungen aus dem Katalysator in die Reaktionsmischung aufweist und im Vergleich zu den flüssigen löslichen Katalysatoren einen deutlich geringeren Trennaufwand für die Abtrennung der Katalysatoren erfordert und auch die Ansammlung von flüchtigen, flüssigen Katalysatoren an bestimmten Kolonnenteilen strikt vermeidet und daß es
(4) durch das Prinzip der Reaktivrektifikation den Energieaufwand für die Trennung der in den einzelnen Gleichgewichtsstufen der Disproportionierung entstehenden Silane oder Chorsilane minimiert.

Allerdings besteht ein schwerwiegender Nachteil dieses in der DE 2 507 864 beschriebenen Verfahrens darin, daß der für die Trennung der Silane oder Chlorsilane aufgewendete Energiebetrag vollständig auf einem den Kondensationstemperaturen entsprechenden sehr niedrigen Temperatumiveau abgeführt werden muß. Am Kopf der Kolonne muß nach DE 2 507 864 nämlich eine Temperatur unterhalb der Kondensationstemperatur von Monochlorsilan SiH₃Cl eingestellt werden und im Bereich des Einlaufs von Trichlorsilan SiHCl₃ eine Temperatur, die die Verdampfung des Trichlorsilans ermöglicht. Somit wird die zur Verdampfung der verschiedenen Chlorsilane und des Silans in den einzelnen Abschnitten der Kolonne erforderliche Energie letztlich bei einer Temperatur unterhalb der Kondensationstemperatur des Monochlorsilans abgeführt, also unterhalb von -50°C bis -120°C. Nun ist die Wärmeabfuhr auf niedrigem Temperaturniveau bekanntermaßen aufwendig und mit zusätzlichem Energieverbrauch verbunden und zwar zunehmend, je niedriger die Temperatur des Kühlmediums einzustellen ist.

In der FR 2 118 725 A sind mehrere Anlagen zur Disproportionierung von Chlorsilanen beschrieben. Bei zwei ersten dort beschriebenen Anlagen wird Trichlorsilan in einer Reaktionskolonne umgesetzt und in einer Destillationskolonne Dichlorsilan abgeschieden. Aus einer verbleibenden Mischung aus Trichlorsilan und Siliciumtetrachlorid wird in einer weiteren Destillationskolonne Siliciumtetrachlorid abgeschieden und das verbleibende Trichlorsilan einem entsprechenden Vorratstank wieder zugeführt. Bei einer dritten beschriebenen Anlage wird Dichlorsilan einer Reaktionskolonne zugeführt und in dieser eine Mischung aus Silan, Dichlorsilan, Trichlorsilan und Siliciumtetrachlorid über eine Abflussleitung abgeführt. Anschließend wird in einer ersten Destillationskolonne Silan abgetrennt. Aus dem verbleibenden Gemisch aus Dichlorsilan, Trichlorsilan und Siliciumtetrachlorid wird anschließend in einer zweiten Destillationskolonne Trichlorsilan und Siliciumtetrachlorid abgetrennt. Das verbleibende Dichlorsilan wird wieder dem Vorratstank zugeführt. Die in der FR 2 118 725 A beschriebenen Verfahren sind aufwendig.

Aufgabe der Erfindung ist es, ein kontinuierliches Verfahren sowie eine Anlage zur Herstellung von Silan durch katalytische Disproportionierung von Trichlorsilan zu Silan und Siliciumtetrachlorid anzugeben, bei dem die Disproportionierung reaktiv/destillativ an katalytisch wirkenden Feststoffen abläuft und Silan und Siliciumtetrachlorid in vergleichsweise hoher Konzentration gewonnen werden und der für die Trennung der disproportionierten Produkte und deren Kondensation erforderliche Aufwand minimiert ist. Die Wärmeabfuhr soll im wesentlichen bei einem Temperaturniveau erfolgen, bei dem Kühlmittel mit einer Temperatur die ohne hohen Aufwand erreichbar ist, einsetzbar sind, und der apparative und energetische Aufwand zur Kälteerzeugung für die Wärmeabfuhr zur Kondensation der Produkte soll reduziert werden.

Es wurde ein kontinuierliches Verfahren zur Herstellung von SiH₄ durch katalytische Disproportionierung von Trichlorsilan SiHCl₃ zu SiH₄ und Siliciumtetrachlorid SiCl₄ in einem reaktiv/destillativen Reaktionsbereich mit Katalysatorbett aus katalytisch wirkendem Feststoff, in das SiHCl₃ eingeführt wird und woraus im Katalysatorbett erzeugtes leichter siedendes SiH₄-haltiges Produkt abgeführt und in einem Kopfkondensator kondensiert und als Endprodukt abgeführt wird, und in dem als schwerer siedendes Sumpfprodukt SiCl₄ gebildet wird, geschaffen, das dadurch gekennzeichnet ist, daß das im Katalysatorbett unter einem Druck von 1 bis 50 bar erzeugte leichter siedende Produktgemisch bei einer Temperatur im Temperaturbereich von -25°C bis 50°C zwischenkondensiert und das dabei nicht kondensierte SiH₄-haltige Produktgemisch im Kopfkondensator kondensiert wird.

Geeignete katalytisch wirksame Feststoffe sind bekannt und auch in der DE 2 507 864 beschrieben. Es sind beispielsweise solche Feststoffe, die an einem Gerüst aus Polystyrol, vemetzt mit Divinylbenzol, Amino- oder Alkylenamino-Gruppen wie Dimethylamino-, Diethylamino-, Ethylmethylamino-, Di-n-propylamino-, Di-i-propylamino-, Di-2-chlorethylamino-, Di-2-Chlorpropylamino-Gruppen und deren Hydrochloride oder aber die durch Methylierung, Ethylierung, Propylierung, Butylierung, Hydroxyethylierung oder Benzylierung und daraus gebildete Trialkylammonium-Gruppen mit Chlorid als Gegenion enthalten. Selbstverständlich können im Fall quartärer Ammoniumsalze oder protonierter Ammoniumsalze auch katalytisch wirksame Feststoffe mit anderen Anionen, z.B. Hydroxid, Sulfat, Hydrogensulfat, Bicarbonat u.a. in das erfindungsgemäße Verfahren eingeführt werden, eine Umwandlung in die Chloridform ist unter den Reaktionsbedingungen mit der Zeit aber unvermeidbar, was auch für organische Hydroxygruppen gilt.

Ebenso sind geeignet Feststoffe, die aus einem Polyacrylsäure-Gerüst, speziell einem Polyacrylamid-Gerüst bestehen, das z.B. über eine Alkylgruppe Trialkylbenzylammonium gebunden hat.

Eine andere für das erfindungsgemäße Verfahren geeignete Gruppe katalytisch wirksamer Feststoffe sind solche, die an einem Polystyrol-Gerüst, vernetzt mit Divinylbenzol, Sulfonat-Gruppen angebunden haben, denen als Kationen tertiäre oder quartäre Ammoniumgruppen gegenüberstehen.

Im Regelfall sind makroporöse oder mesoporöse Austauscherharze besser als Gelharze geeignet. Weitere geeignete katalytisch wirksame Feststoffe sind solche, die auf einem festen anorganischen Gerüst wie Kieselsäure oder Zeolith angebundene organische Aminogruppen der obengenannten Art, z.B. solche mit einer 3-Siloxypropyldimethylamino-Gruppe, tragen (US 4 701 430). Die geeigneten, katalytisch wirksamen Feststoffe werden üblicherweise in Perlform eingesetzt.

Verschiedene geeignete Aktivierungs- und Vorbehandlungsmethoden für diese Katalysatoren sind in der Literatur beschrieben.

In vorteilhafter Ausgestaltung des erfindungsgemäßen Verfahrens wird das SiH₄haltige Produktgemisch zur Konzentrationserhöhung des SiH₄ noch vor Kondensation des SiH₄-Endprodukts von im Gemisch enthaltenen schwerer siedenden Chlorsilanen getrennt. Die Trennung erfolgt bevorzugt bei einem gegenüber der Zwischenkondensation erhöhtem Druck, so daß die Konzentration des SiH₄ bei höherem Temperaturniveau zu erreichen ist und somit bei höherer SiH₄-Konzentration eine geringere Produktmenge zu kondensieren ist. Beim Trennen erhaltenes Chlorsilan wird zweckmäßig in den reaktiv/destillativen Reaktionsbereich zurückgeführt.

Die Erfindung und weitere Ausgestaltungen der Erfindung werden nachfolgend anhand von Anlagen zur Durchführung des Verfahrens und entsprechenden Ausführungsbeispielen näher erläutert. Die Zeichnung zeigt im einzelnen:
- Figur 1: Anlage zur Gewinnung von Silan mit reaktiv/destillativem Reaktionsbereich, mit Zwischenkondensator und integriertem Verstärkerteil und einem dem Verstärkerteil nachgeschaltetem externen Kopfkondensator zur Kondensation von Silan;
- Figur 2: Anlage zur Gewinnung von Silan mit reaktiv/destillativem Reaktionsbereich, mit Zwischenkondensator und integriertem Verstärkerteil, einem dem Verstärkerteil nachgeschalteten externen Kondensator, diesem nachgeschalteter Trennkolonne und an der Trennkolonne angeschlossenem Kopfkondensator zur Kondensation von Silan.
- Figur 3: Ausführung mit extern angeordneten Reaktoren.

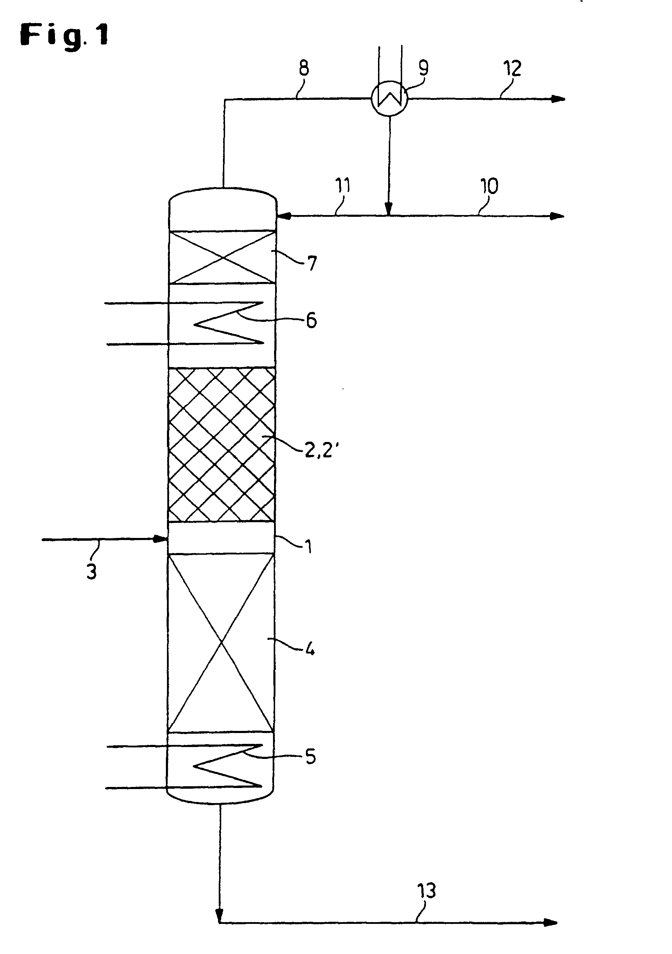

In Figur 1 ist ein Fließschema einer Anlage zur kontinuierlichen Gewinnung von Silan SiH₄ dargestellt, die eine im wesentlichen senkrecht stehende Reaktionskolonne 1 mit einem reaktiv/destillativen Reaktionsbereich 2 zur katalytische Disproportionierung von Trichlorsilan SiHCl₃ aufweist. Die Disproportionierung im Reaktionsbereich 2 erfolgt in einem Katalysatorbett 2', das aus einer für die Disproportionierungsprodukte durchströmbaren Schüttgutschicht aus Festkörpern aus katalytisch wirksamen Feststoffen besteht. Statt einer Schüttgutschicht können im Reaktionsbereich auch gepackte Katalysatorkörper vorgesehen sein. Als katalytisch wirksame Feststoffe werden bevorzugt in der DE 2 507 864 beschriebene Feststoffe eingesetzt, wie sie oben angegeben sind.

Das SiHCl₃ wird der Reaktionskolonne 1 über einen Zulauf 3 zugeführt, der in die Kolonne an geeigneter Stelle mündet. Im Reaktionsbereich 2 wird durch Disproportionierung von SiHCl₃ ein SiH₄-haltiges, im Reaktionsbereich aufsteigendes Produktgemisch, und ein SiCl₄ enthaltendes, im Reaktionsbereich abströmendes Kondensat gebildet.

Das aus dem Reaktionsbereich austretende SiCl₄ enthaltende Kondensat wird in der Reaktionskolonne 1 in einen unterhalb des reaktiv/destillativen Reaktionsbereichs 2 angeordneten destillativen Abtriebsteil 4 eingeführt, unter dem sich dann ein Sumpfverdampfer 5 befindet, aus dem als Sumpfprodukt Siliciumtetrachlorid SiCl₄ über einen Abfluß 13 abfließt. Über den Wärmetauscher 5 erfolgt der erforderliche Wärmeeintrag in die Reaktionskolonne zur Disproportionierung von SiHCl₃.

Für das im Reaktionsbereich 2 aufsteigende SiH₄-haltige Produktgemisch ist oberhalb des Reaktionsbereichs ein Zwischenkondensator 6 vorgesehen, in dem durch Teilkondensation von schwerer siedenden Komponenten bei einer Temperatur zwischen -25°C und 50°C, bevorzugt zwischen -5°C und 40°C, die Konzentration von SiH₄ im Produktgemisch erhöht wird. Die Kondensationswärme wird von einem den Zwischenkondensator 6 durchströmenden Kühlmedium abgeführt. Die im Zwischenkondensator 6 nicht kondensierten, leichter siedenden Produktanteile werden zur weiteren Konzentrationserhöhung in einen dem Zwischenkondensator in Strömungsrichtung der aufsteigenden Produktanteile nachgeschalteten Verstärkerteil 7 zugeführt. Im Ausführungsbeispiel nach Figur 1 ist der Verstärkerteil 7 oberhalb des Zwischenkondensators 6 eingesetzt und in die Reaktionskolonne 1 integriert. Der Verstärkerteil kann aber auch außerhalb der Reaktionskolonne angeordnet sein. Das aus dem Verstärkerteil 7 abziehende Produktgemisch wird schließlich vom Kopf der Reaktionskolonne über einen Abzug 8 in einen Kopfkondensator 9 geleitet, dort niedergeschlagen und als erhaltenes SiH₄-Endprodukt über eine SiH₄-Produktleitung 10 flüssig abgeführt. Ein Teil des gewonnenen SiH₄ wird über eine Zweigleitung 11 zum Kopf der Reaktionskolonne 1 zurückgeführt. Die Zweigleitung 11 mündet in die Kolonne oberhalb des Verstärkerteils 7.

Im Kopfkondensator 9 bei Kondensation des SiH₄ als Rest anfallende inerte Gasanteile werden vom Kopfkondensator über eine Inertgasleitung 12 abgezogen.

Erfindungsgemäß wird im Ausführungsbeispiel nach Figur 1 nach Kondensation des am Kopf der Reaktionskolonne 1 abgezogenen Produkts im Kopfkondensator 9 Silan in einer Konzentration von >70 %, bevorzugt >90 %, besonders bevorzugt >98 % gewonnen. Dabei erfolgt nach Disproportionierung von SiHCl₃ im reaktiv/destillativen Reaktionsbereich 2 eine Zwischenkondensation des vom Reaktionsbereich zum Kopf der Reaktionskolonne 1 hin strebenden leichter siedenden SiH₄haltigen Produktes. Statt eines Zwischenkondensators, wie im Ausführungsbeispiel, lassen sich auch mehrere Zwischenkondensatoren übereinander einsetzen. Der oder die Zwischenkondensatoren 6 arbeiten bei Temperaturen, bei denen die Abführung der Kondensationswärme mit einem Kühlmedium noch zwischen -25°C und 50°C möglich ist, bevorzugt zwischen -5°C und 40°C, so daß nur ein anteiliger wesentlich kleinerer, nicht kondensierter Teil des SiH₄-haltigen Produktgemisches einem mit normalen Einbauten für die Destillation wie Böden und Packungen ausgestatteten Verstärkerteil 7 zugeführt werden muß, und nur der aus dem Verstärkerteil abziehende Gasanteil ist schließlich im Kopfkondensator 9 bei sehr tiefen Temperaturen zu kondensieren.

Der Verstärkerteil 7 samt zugehörigem Kopfkondensator 9 kann auch außerhalb der Reaktionskolonne 1 extern angeordnet sein.

Bei den üblicherweise angewendeten Drücken von 1 bis 50 bar, bevorzugt 1 bis 10 bar, und den gewünschten Reinheiten des Silanprodukts ist der Kopfkondensator 9 unterhalb der Kondensationstemperaturen von < - 40°C, meist sogar unter < -60°C zu betreiben. Durch die Installation rein destillativer Trennabschnitte vor Kondensation des Silan-Endprodukts und das Anordnen eines destillativen Abtriebsteils 4 oberhalb des Sumpfverdampfers 5 wird die eingetragene Energie mehrfach genutzt, und zwar (1) zur Reinigung und Konzentrierung des Silans im Verstärkerteil 7, (2) zur ständigen destillativen Entfernung der bezogen auf die jeweiligen lokalen apparativen Verhältnisse leichter siedenden Zwischenprodukte bzw. Produkte und damit zur Erhöhung der Reaktionsgeschwindigkeit im reaktiv/destillativen Reaktionsbereich 2, und (3) zur Reinigung des SiCl₄ im unteren Teil der Reaktionskolonne. Durch den destillativen Abtriebsteil 4 und die dadurch mögliche Reinigung des am Sumpf entnommenen SiCl₄ entsteht ein weiterer Vorteil gegenüber dem aus DE 2 507 864 bekannten Verfahren, weil eine nachfolgende Kolonne zur Reinigung des SiCl₄ entfallen kann und somit auch für diesen Verfahrensschritt erforderliche Energie eingespart wird.

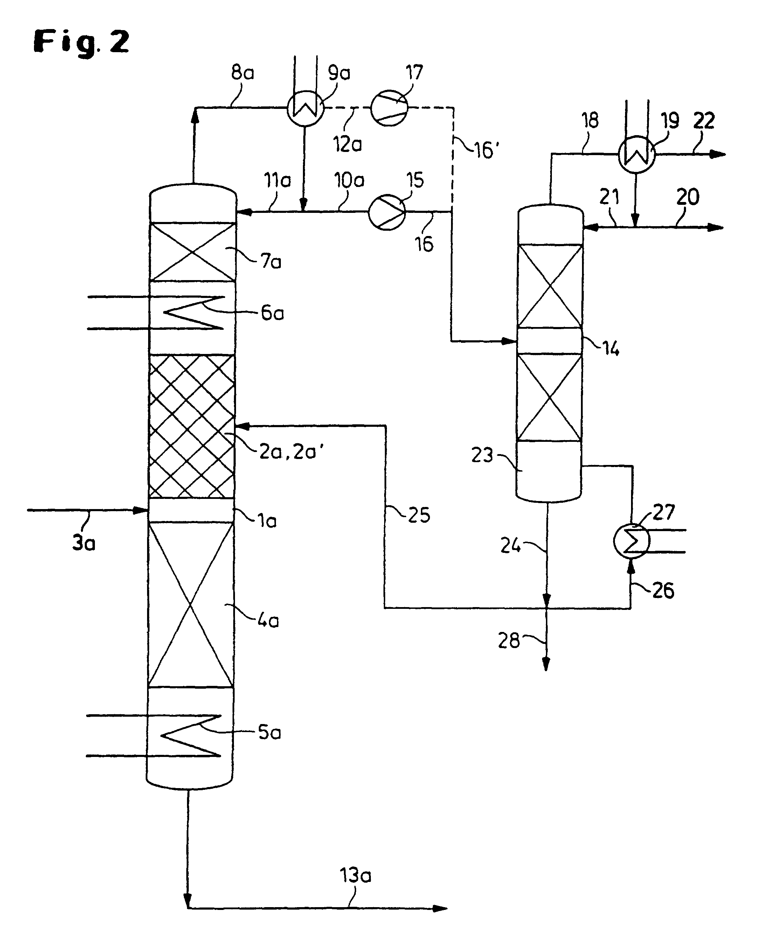

Ein weiteres Ausführungsbeispiel ist in Figur 2 dargestellt. Bei diesem Beispiel entspricht die Reaktionskolonne 1a in ihrem Aufbau weitgehend der Ausbildung der Reaktionskolonne 1 nach Figur 1. Alle Apparateteile, die analog den Teilen nach Figuren 1 und 2 gestaltet sind, werden deshalb mit gleichen Bezugszeichen, jedoch zur Unterscheidung jeweils mit angefügtem Index "a" angegeben.

Die Trennkolonne 14 ist beim Ausführungsbeispiel nach Figur 2 einem Kondensator 9a nachgeschaltet, der zwischen Verstärkerteil 7a und Trennkolonne 14 angeordnet ist. Im Kondensator 9a wird das aus dem Verstärkerteil 7a über den Abzug 8a abströmende, nicht kondensierte SiH₄-haltige Produktgemisch vor Eintritt in die Trennkolonne 14 zumindest zu einem Teil kondensiert, so daß in die Trennkolonne 14 ein an SiH₄ höher aufkonzentriertes Produktgemisch eingeführt wird. Vom im Kondensator 9a erzeugten Kondensat wird ein Teil über eine Zweigleitung 11a in die Reaktionskolonne 1a oberhalb ihres Verstärkerteils 7a zurückgeführt. Der übrige Teil des Kondensats wird von einer Flüssigkeitspumpe 15 komprimiert und in einer Druckleitung 16 zur Trennkolonne 14 geführt. Wird im Kondensator 9a nur ein Teil des vom Verstärkerteil 7a abziehenden Produktgemisches kondensiert, wird der Rest über einen Abzug 12a mittels eines Kompressors 17 abgesaugt und komprimiert über eine Druckleitung 16' in die Trennkolonne 14 eingeleitet. Alternativ kann der Strom 12a auch einer Aufarbeitung zugeführt werden.

Vom Kopf der Trennkolonne 14 führt ein Abzug 18 zu einem Kopfkondensator 19, aus dem das gewonnene kondensierte Silan in einer SiH4-Produktleitung 20 abgeführt wird. Ein Teil des flüssigen Silans wird in einer Zweigleitung 21 zurück in die Trennkolonne 14 geleitet. Im Kopfkondensator anfallende Inertgase strömen über eine Inertgasleitung 22 ab.

Vom Sumpf 23 der Trennkolonne 14 wird das Sumpfprodukt der Trennkolone über einen Sumpfabzug 24 abgeführt. Ein Teil des Sumpfprodukts fließt über die Zweigleitung 25 in die Reaktionskolonne 1a zurück, ein weiterer Teil wird über eine Rückführung 26 nach Verdampfung im Wärmetauscher 27 in den Sumpfbereich der Trennkolonne 14 zurückgeführt, ein weiterer Teil kann zur Ausschleusung von Verunreinigungen ganz aus der Anlage entnommen werden (28).

Im Ausführungsbeispiel nach Figur 2 wird zur Erhöhung der Kondensationstemperatur im Kondensator 9a und zur weiteren Absenkung der bei sehr niedriger Temperatur abzuführenden Kondensationsenergie durch Minderung der Rücklaufmenge gegenüber dem Ausführungsbeispiel nach Figur 1 und vollständiges oder teilweises Kondensieren im Kondensator 9a ein flüssiges oder gasförmiges Kopfprodukt mit geringerer Silanreinheit zwischen 25 % bis 90 % erzeugt. Dieses Kopfprodukt wird dann zur weiteren Reinigung in der nachgeschalteten Trennkolonne 14 getrennt, wobei ein gleicher oder vorzugsweise höherer Druck als in der Reaktionskolonne 1a, vorzugsweise 15 bar bis 100 bar, eingestellt ist, so daß die Trennkolonne 14 folglich bei höheren Temperaturen, bezogen auf gleiche Zusammensetzung, arbeitet als die Reaktionskolonne 1a. Auch bei dieser Variante kann das Sumpfprodukt der getrennt stehenden Trennkolonne 14 abhängig von den gewählten Betriebsbedingungen große Anteile Trichlorsilan, Dichlorsilan und Monochlorsilan enthalten. Das Sumpfprodukt wird über die am Abzug 24 angeschlossene Zweigleitung 25 ganz oder teilweise in die Reaktionskolonne 1a zurückgeführt. Durch Ausschleusen eines Teilstroms können gegebenenfalls Verunreinigungen aus dem System entfernt werden (28).

Die Zulaufmenge oder die Zulaufmengen in die Reaktionskolonne über die Zuleitungen 3, 3a und 25, werden gegebenenfalls nach Vorreaktion in einem Vorreaktor in Abhängigkeit von der jeweiligen Zusammensetzung in den Abtriebsteil 4, 4a oder zwischen reaktiv/destillativen Reaktionsbereichen 2, 2a und Abtriebsteil oder in die reaktiv-destillative Reaktionszone oder in den Zwischenkondensator 6, 6a geführt.

Das erfindungsgemäße Verfahren wird bei Drücken von 1 bis 50 bar, vorzugsweise 1 bis 10 bar, besonders bevorzugt 2,8 bis 5 bar, im reaktiv/destillativen Reaktionsbereich mit katalytisch wirksamen Feststoffen betrieben. Mit den Drücken werden die Temperaturen im System beeinflußt. Die Temperaturen in demjenigen Abschnitt des reaktiv/destillativen Reaktionsteils, in dem die Disproportionierung stattfindet, liegen zwischen 30°C und 180°C, vorzugsweise zwischen 50°C und 110°C. Die jeweils einzustellende Temperatur richtet sich nach dem Stabilitätsbereich der eingesetzten katalytisch wirksamen Feststoffe.

Nachteil der früher beschriebenen Verfahren zur destillativen Abtrennung von reinem Silan bei überlagerter Reaktion ist die große Wärmemenge, die bei der Kondensationstemperatur des Silans bei gegebenem Druck, also z.B. bei -50°C bis -120°C abgeführt werden muß. Die Kondensation bei diesen Temperaturen ist, wie bereits erläutert, wirtschaftlich sehr ungünstig. Die bei Betrieb ohne Zwischenkondensator abzuführende Wärmemenge liegt in der gleichen Größenordnung wie die am Sumpf der Reaktionskolonne zugeführte Wärmemenge und die für die Wärmeabfuhr aufzubringenden Kosten dürften somit die Kosten für den Wärmeeintrag im allgemeinen deutlich übersteigen. Dies wird durch die erfindungsgemäße Zwischenkondensation größtenteils vermieden. Beispielsweise läßt sich schon bei Verwendung eines 25°C warmen Kühlmediums für die Zwischenkondensation zur Abkühlung des oberhalb des Zwischenkondensators bzw. oberhalb der Zwischenkondensatoren austretenden Gasstromes auf 40°C in Abhängigkeit vom Systemdruck 60 % bis 97 % der Kondensationswärme abfiihren, so daß nur noch 3 % bis 40 % der Kondensationswärme bei Kondensationstemperatur des Silans abgeführt werden müssen. Dennoch gelingt bereits oberhalb des Zwischenkondensators in einer direkt aufgesetzten und /oder in einer getrennten aufgestellten Trennkolonne ein Reinigung des Silans auf vorzugsweise mehr als 90 % SiH₄, besonders bevorzugt mehr als 98 % SiH₄, wobei der zur Kondensation des Silans geeignete Kondensator am Kopf der Trennkolonne mit einer Kühlmitteltemperatur unterhalb der Kondensationstemperatur des Silans betrieben wird.

Durch die Zwischenkondensation bleiben die Verhältnisse innerhalb der Reaktionszonen im reaktiv/destillativen Reaktionsbereich gegenüber einer Reaktionskolonne ohne Zwischenkondensator im wesentlichen unverändert, so daß entstehende Zwischenprodukte und Produkte weiterhin ausreichend effektiv nach ihrem Entstehen destillativ abgetrennt werden können. Nur oberhalb des Zwischenkondensators sind die Dampf- und Flüssigkeitsströme gegenüber dem restlichen System deutlich reduziert. Sie reichen aber aus, um die im Vergleich zum Sumpfprodukt der Reaktionskolonne, dem SiCl₄, geringen Mengen an Silan, welches deutliche Siedepunktsunterschiede zu den restlichen Komponenten aufweist, in einer aufgesetzten oder getrennten Trennkolonne bis auf Reinheiten von >50 %, besonders bevorzugt >98 % aufzukonzentrieren.

Als Einbauten werden in der erfindungsgemäßen Anlage in den Reaktionskolonnen vorzugsweise solche verwendet, die einen intensiven Stoffaustausch zwischen Gasund Flüssigphase gewährleisten und gleichzeitig einen intensiven Kontakt zum festen Katalysator erlauben. Aufgrund der Kombination von Stoffübergang und Reaktion wird im reaktiv/destillativen Reaktionsbereich durch die schnelle Abtrennung entstehender Produkte ein ausreichender Abstand vom jeweiligen chemischen Reaktionsgleichgewicht gewährleistet, so daß die Reaktion stets mit hoher Reaktionsgeschwindigkeit verläuft. Beispiele für solche Kolonneneinbauten sind Böden, Packungen oder Füllkörper zum Einbringen heterogener Katalysatoren, wie sie z.B. in folgenden Druckschriften beschrieben sind: EP 670 178, EP 461 855, US 5 026 459, US 4 536 373, WO 94/08681, WO 94/08682,WO 94/08679, EP 470 655, WO 97/26971, US 5 308 451, EP 755 706, EP 781 829, EP 428 265, EP 448 884, EP 640 385, EP 631 813, WO 90/02603, WO 97/24174, EP 665 041, EP 458 472, EP 476 938 und deutsches Gebrauchsmuster 298 07 007.3. Es ist aber auch möglich, den festen Katalysator als solchen oder in einer agglomerierten Form auf Destillationsböden auszubreiten. Im Verfahren werden die Verweilzeit, das Katalysatorvolumen und die destillative Trennwirkung im Reaktionsbereich auf die Reaktionskinetik und die Stoffübergangskinetik abgestimmt, wobei das Optimum der Parameter stark von den Randbedingungen wie z.B. vom gewählten Katalysator, dem Stoffsystem und den gewählten Druck- und Temperaturbedingungen abhängt.

Alternativ kann der Katalysator in externe, gegebenenfalls temperierte Reaktoren eingebracht werden, wobei wechselweise die Flüssigphase von der Reaktionskolonne in den Reaktor und von dort zur Stofftrennung wieder zurück in die Kolonne geführt wird. Hierbei wirkt sich jedoch nachteilig aus, daß entstehende Produkte im allgemeinen nicht so schnell nach ihrer Entstehung destillativ abgetrennt werden können, wie dies bei den vorgenannten Böden, Packungen und Füllkörpern der Fall ist. Zur Entkopplung unterschiedlicher Temperaturen innerhalb der Kolonne und in externen Reaktionen ist eine Temperierung der Stoffströme zwischen Kolonne und den Reaktoren möglich.

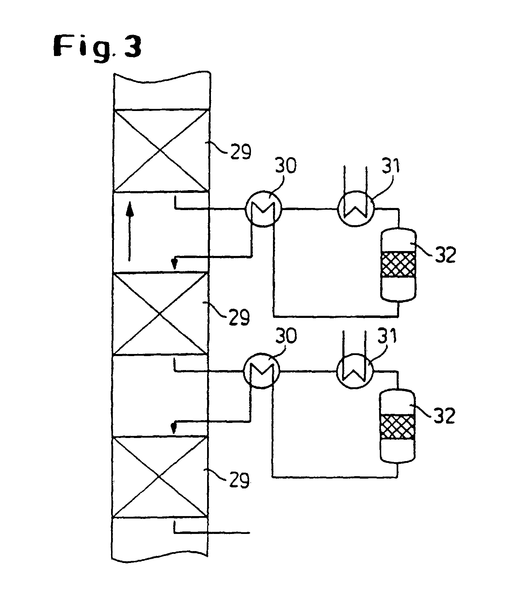

In Figur 3 ist der destillativ/reaktive Reaktionsbereich 2; 2a aus den Figuren 1 und 2 für die Ausführung mit extern angeordneten Reaktoren dargestellt. Das aus einem destillativen Teil 29 ablaufende flüssige Gemisch gelangt, gegebenenfalls über Wärmerückgewinnung und Temperierung 31 in einen von oben nach unten oder von unten nach oben durchströmten Reaktor 32 und daraus auf den nächsten destillativen Abschnitt. Die Sequenz "destillativer Abschnitt-Temperierung-Reaktor" läßt sich beliebig oft übereinander anordnen.

Die im Reaktionsbereich der Reaktionskolonnen ablaufende Disproportionierung wird gemäß der Erfindung durch eine rein destillative Abtrennung und Reinigung der an Kopf und Sumpf der Reaktionskolonnen auszuschleusenden Silan bzw. Siliciumtetrachlorid enthaltenden Produkte ergänzt. Die destillative Trennung wird mittels der üblichen Einbauten für die reine Destillation wie Böden, Packungen und Füllkörpern durchgeführt. Für die ablaufende schwerer siedende SiCl₄-Komponente ist es günstig, durch rein destillative Abtrennung unterhalb des reaktiv/destillativen Reaktionsbereiches im unteren Bereich der Reaktionskolonne ein weitgehend aufkonzentriertes Siliciumtetrachlorid mit mehr als 70 % SiCl₄, vorzugsweise mehr 95 % SiCl₄, besonders bevorzugt mehr als 99 % SiCl₄ als Sumpfprodukt zu erzeugen und dieses dem Sumpf der Reaktionskolonne zu entnehmen.

### Bezugszeichenliste

- Reaktionskolonne: 1, 1a
- reaktiv/destillativer Reaktionsbereich: 2, 2a
- Katalysatorbett: 2', 2a'
- SiHCl₃ - Zuleitung: 3, 3a
- destillativer Abtriebsteil: 4, 4a
- Sumpfverdampfer: 5, 5a
- Zwischenkondensator: 6, 6a
- Verstärkerteil: 7, 7 a
- Dampfabzug: 8, 8a
- Kopfkondensator: 9, 9a
- SiH₄-Produktleitung: 10, 10a
- Zweigleitung: 11, 11a
- Inertgasleitung: 12, 12a
- SiCl₄-Abfluß: 13, 13a
- Trennkolonne: 14
- Flüssigkeitspumpe: 15
- Druckleitung: 16
- Kompressor: 17
- Abzug: 18
- Kopfkondensator: 19
- SiH₄-Produktleitung: 20
- Zweigleitung: 21
- Inertgasleitung: 22
- Sumpf: 23
- Sumpfabzug: 24
- Zweigleitung: 25
- Rückführung: 26
- Wärmetauscher: 27
- Ausschleusung: 28
- Destillationsteil: 29
- Wärmerückgewinnung: 30
- Temperierung/Wärmetauscher: 31
- Reaktor: 32

## Patentansprüche

1. Kontinuierliches Verfahren zur Herstellung von Silan SiH₄ durch katalytische Disproportionierung von Trichlorsilan SiHCl₃ zu SiH₄ und Siliciumtetrachlorid SiCl₄ in einem reaktiv/destillativen Reaktionsbereich mit Katalysatorbett aus katalytisch wirkendem Feststoff, in das SiHCl₃ eingeführt wird und woraus im Katalysatorbett erzeugtes leichter siedendes SiH₄-haltiges Produkt abgeführt und in einem Kopfkondensator kondensiert und als Endprodukt abgeführt wird, und in dem als schwerer siedendes Sumpfprodukt SiCl₄ gebildet wird, **dadurch gekennzeichnet, daß** das im Katalysatorbett unter einem Druck von 1 bis 50 bar erzeugte leichter siedende Produktgemisch bei einer Temperatur im Temperaturbereich von -25°C bis 50°C zwischenkondensiert und das dabei nicht kondensierte SiH₄-haltige Produktgemisch im Kopfkondensator kondensiert wird.

2. Verfahren nach Anspruch 1, **dadurch gekennzeichnet, daß** der Druck im Katalysatorbett 1 bis 10 bar beträgt.

3. Verfahren nach Anspruch 1, **dadurch gekennzeichnet, daß** die Zwischenkondensation bei einer Temperatur im Temperaturbereich zwischen -5°C und 40°C erfolgt.

4. Verfahren nach Anspruch 3, **dadurch gekennzeichnet, daß** das an Kopfkondensator anfallende Produktgemisch bei einem gegenüber der Zwischenkondensation erhöhtem Druck getrennt wird.

5. Verfahren nach Anspruch 3 oder 4, **dadurch gekennzeichnet, daß** das Chlorsilan zumindest zu einem Teil in den reaktiv/destillativen Reaktionsbereich zurückgeführt wird.

6. Anlage zur Herstellung von Silan SiH₄ in kontinuierlicher Weise durch Disproportionierung von Trichlorsilan SiHCl₃ zu SiH₄ und Siliciumtetrachlorid SiCl₄ in einer Reaktionskolonne (1, 1a) mit einem reaktiv /destillativen Reaktionsbereich (2, 2a), der ein von Festkörpern aus katalytisch wirkendem Feststoff gebildetes, von den Disproportionierungsprodukten und Trichlorsilan durchströmbares Katalysatorbett (2', 2a') aufweist, mit einem Zulauf (3, 3a) für SiHCl₃ zum Reaktionsbereich, sowie mit einem an der Reaktionskolonne angeschlossenem Kopfkondensator (9, 9a) zur Kondensation von erzeugtem SiH₄haltigen Produkt und einem Abzug für kondensiertes SiH₄ am Kopfkondensator (10, 10a), und mit einem Abfluß (13, 13a) an der Reaktionskolonne für als Sumpfprodukt anfallendes SiCl₄, zur Durchführung des Verfahrens nach Anspruch 1, **dadurch gekennzeichnet, daß** zwischen reaktiv destillativem Reaktionsbereich (2, 2a) und Kopfkondensator (9, 9a) zumindest ein Zwischenkondensator (6, 6a) angeordnet ist, in dem durch Teilkondensation von schwerer siedenden Komponenten bei einer Temperatur im Temperaturbereich von -25°C bis 50°C die Konzentration von SiH₄ im SiH₄-haltigen Produkt erhöht wird.

7. Anlage nach Anspruch 6, **dadurch gekennzeichnet, daß** im Zwischenkondensator (6, 6a) eine Temperatur im Temperaturbereich von -5°C bis 40°C eingestellt ist.

8. Anlage nach Anspruch 6 oder 7, **dadurch gekennzeichnet, daß** der Zwischenkondensator (6, 6a) oberhalb des Katalysatorbettes (2', 2a') angeordnet ist.

9. Anlage nach einem der Ansprüche 6, 7 oder 8, **dadurch gekennzeichnet, daß** dem Zwischenkondensator (6, 6a) in Strömungsrichtung des vom Zwischenkondensator abströmenden leichter siedenden Produktgemisches ein Verstärkerteil (7, 7a) zur Erhöhung der SiH₄-Konzentration im Produktgemisch nachgeschaltet ist.

10. Anlage nach einem der Ansprüche 6, 7 oder 8, **dadurch gekennzeichnet, daß** dem Zwischenkondensator (6a) in Strömungsrichtung des vom Zwischenkondensator abströmenden leichter siedenden Produktgemischs eine Trennkolonne (14) zur Trennung SiH₄-haltiger Produktanteile von schwerer siedenden Chlorsilan-Komponenten nachgeschaltet ist.

11. Anlage nach Anspruch 9 und 10, **dadurch gekennzeichnet, daß** die Trennkolonne (14) dem Verstärkerteil (7a) nachgeschaltet ist.

12. Anlage nach Anspruch 11, **dadurch gekennzeichnet, daß** zwischen Verstärkerteil (7a) und Trennkolonne (14) ein Kondensator (9a) angeordnet ist.

13. Anlage nach einem der Ansprüche 10 bis 12, **dadurch gekennzeichnet, daß** die Trennkolonne (14) bei einem gegenüber dem Zwischenkondensator (6, 6a) erhöhtem Druck arbeitet und das zur Trennkolonne (14) geführte Produkt komprimiert wird.

14. Anlage nach einem der Ansprüche 10 bis 13, **dadurch gekennzeichnet, daß** am Sumpfabzug (24) der Trennkolonne (14) eine Zweigleitung (25) angeschlossen ist, die in den reaktiv/destillativen Reaktionsbereich (2a) der Reaktionskolonne (1a) mündet.

## Claims

1. Continuous process for the preparation of silane SiH₄ by catalytic disproportionation of trichlorosilane SiHCl₃ to form SiH₄ and silicon tetra-chloride SiCI₄ in a reactive/distillative reaction zone comprising a catalyst bed of catalytically active solid, into which SiHCl₃ is introduced and from which lower-boiling SiH₄-containing product formed in the catalyst bed is taken off and condensed in an overhead condenser and discharged as final product, and in which SiCl₄ is formed as higher-boiling bottom product, **characterized in that** the lower-boiling product mixture, which has formed in the catalyst bed at a pressure of 1 to 50 bar, is subjected to an intermediate condensation at a temperature in the range from -25°C to 50°C, and the SiH₄-containing product mixture which is not condensed in the intermediate condensation is condensed in the overhead condenser.

2. Process according to Claim 1, **characterized in that** the pressure in the catalyst bed is from 1 to 10 bar.

3. Process according to Claim 1, **characterized in that** the intermediate condensation is carried out at a temperature in the range between -5°C and 40°C.

4. Process according to Claim 3, **characterized in that** the product mixture obtained in the overhead condenser is separated at a pressure which his higher than that employed in the intermediate condensation.

5. Process according to Claim 3 or 4, **characterized in that** all or part of the chlorosilane is returned to the reactive/distillative reaction zone.

6. Installation for the continuous preparation of silane SiH₄ by catalytic disproportionation oftrichlorosilane SiHCI₃ to form SIH₄ and silicon tetra-chloride SiCl₄ in a reaction column (1, 1a) having a reactive/distillative reaction zone (2, 2a) which comprises a catalyst bed (2', 2a') which is made of solid bodies of catalytically active solid and through which the disproportionation products and trichlorosilane can flow, an inlet (3, 3a) for introducing SiHCl₃ into the reaction zone, and an overhead condenser (9, 9a) connected to the reaction column for condensing SiH₄-containing product formed and an outlet for condensed SiH₄ at the overhead condenser (10, 10a), and an outflow (13, 13a) at the reaction column for SiCI₄ which is obtained as bottom product, for carrying out the process according to Claim 1, **characterized in that** at least one intermediate condenser (6, 6a) is arranged between the reactive/distillative reaction zone (2, 2a) and the overhead condenser (9, 9a), in which the concentration of SiH₄ in the SiH₄-containing product is increased by partial condensation of higher-boiling components at a temperature in the range from -25°C to 50°C.

7. Installation according to Claim 6, **characterized in that** a temperature in the range from -5°C to 40°C is set in the intermediate condenser (6, 6a).

8. Installation according to Claim 6 or 7, **characterized in that** the intermediate condenser (6, 6a) is arranged above the catalyst bed (2', 2a').

9. Installation according to one of Claims 6, 7 or 8, **characterized in that** a rectifying section (7, 7a) for increasing the SiH₄ concentration in the product mixture is arranged downstream of the intermediate condenser (6, 6a) in the direction of flow of the lower-boiling product mixture coming from the intermediate condenser.

10. Installation according to one of Claims 6, 7 or 8, **characterized in that** a separation column (14) for separating SiH₄-containing product fractions from higher-boiling chlorosilane components is arranged downstream of the intermediate condenser (6a) in the direction of flow of the lower-boiling product mixture coming from the intermediate condenser.

11. Installation according to Claim 9 and 10, **characterized in that** the separation column (14) is arranged downstream of the rectifying section (7a).

12. Installation according to Claim 11, **characterized in that** a condenser (9a) is arranged between rectifying section (7a) and separation column (14).

13. Installation according to one of Claims 10 to 12, **characterized in that** the separation column (14) is operated at a pressure which is higher than that in the intermediate condenser (6, 6a), and the product which is conducted to the separation column (14) is compressed.

14. Installation according to one of Claims 10 to 13, **characterized in that** a branch line (25) which opens into the reactive/distillative reaction zone (2a) of the reaction column (1a) is connected to the bottom outlet (24) of the separation column (14).

## Revendications

1. Procédé continu pour la production de silane SiH₄ par disproportionation catalytique de trichlorosilane SiHCl₃ en SiH₄ et tétrachlorure de silicium SiCl₄ dans une zone de réaction distillative/réactive avec un lit catalytique d'un solide à action catalytique dans lequel on introduit du SiHCl₃ et duquel on retire le produit à ébullition plus facile contenant du SiH₄ produit dans le lit catalytique que l'on condense dans un condensateur de tête et que l'on récupère en tant que produit final et dans lequel il se forme du SiCl₄ en tant que produit de bas de colonne à ébullition plus difficile, **caractérisé en ce que** le mélange de produits à ébullition plus facile produit dans le lit catalytique à une pression de 1 à 50 bars se condense de façon intermédiaire à une température de -25°C à 50°C et **en ce que** l'on condense le mélange de produits contenant du SiH₄ non condensé lors de cette opération dans le condensateur de tête.

2. Procédé selon la revendication 1, **caractérisé en ce que** la pression, dans le lit catalytique, va de 1 à 10 bars.

3. Procédé selon la revendication 1, **caractérisé en ce que** la condensation intermédiaire a lieu à une température comprise entre -5°C et 40°C.

4. Procédé selon la revendication 3, **caractérisé en ce que** le mélange de produits arrivant au condensateur de tête est séparé à une pression supérieure à celle de la condensation intermédiaire.

5. Procédé selon la revendication 3 ou 4, **caractérisé en ce que** le chlorosilane est réintroduit, du moins en partie, dans la zone de réaction distillative/réactive.

6. Installation pour la production de silane SiH₄ en mode continu par disproportionation de trichlorosilane SiHCl₃ en SiH₄ et tétrachlorure de silicium SiCl₄ dans une colonne de réaction (1, 1a) avec une zone de réaction distillative/réactive (2, 2a) qui présente un lit catalytique (2', 2a') capable d'être traversé par des produits de disproportionation et de trichlorosilane et formé de corps solides d'un solide à action catalytique, avec une arrivée (3, 3a) pour le SiHCl₃ vers la zone de réaction ainsi qu'avec un condensateur de tête (9, 9a) raccordé à la colonne de réaction pour la condensation du produit contenant du SiH₄ produit et une sortie pour le SiH₄ condensé sur le condensateur de tête (10, 10a) et avec une évacuation (13, 13a) sur la colonne de réaction pour le SiCl₄ en tant que produit de fond de colonne, pour la réalisation du procédé selon la revendication 1, **caractérisée en ce que**, entre la zone de réaction distillative/réactive (2, 2a) et le condensateur de tête (9, 9a) est disposé du moins un condensateur intermédiaire (6, 6a) dans lequel la concentration de SiH₄ dans le produit contenant du SiH₄ est augmentée par condensation partielle de composants à ébullition plus difficile à une température de -25°C à 50°C.

7. Installation selon la revendication 6, **caractérisée en ce que**, dans le condensateur intermédiaire (6, 6a), on ajuste la température à une valeur de -5°C à 40°C.

8. Installation selon la revendication 6 ou 7, **caractérisée en ce que** le condensateur intermédiaire (6, 6a) est disposé au-dessus du lit catalytique (2', 2a').

9. Installation selon l'une quelconque des revendications 6, 7 ou 8, **caractérisée en ce qu'**un élément amplificateur (7, 7a), destiné à augmenter la concentration en SiH₄, est intercalé à la suite du condensateur intermédiaire (6, 6a), dans le sens de l'écoulement du mélange de produits à ébullition plus facile s'écoulant depuis le condensateur intermédiaire.

10. Installation selon l'une quelconque des revendications 6, 7 ou 8, **caractérisée en ce qu'**une colonne de séparation (14), destinée à séparer les fractions de produit contenant du SiH₄ des composants de chlorosilane à ébullition plus difficile, est intercalée à la suite du condensateur intermédiaire (6a), dans le sens de l'écoulement du mélange de produits à ébullition plus facile s'écoulant depuis le condensateur intermédiaire.

11. Installation selon les revendications 9 et 10, **caractérisée en ce que** la colonne de séparation (14) est intercalée à la suite de l'élément amplificateur (7a).

12. Installation selon la revendication 11, **caractérisée en ce qu'**un condensateur (9a) est disposé entre l'élément amplificateur (7a) et la colonne de séparation (14).

13. Installation selon l'une quelconque des revendications 10 à 12, **caractérisée en ce que** la colonne de séparation (14) fonctionne à une pression accrue par rapport au condensateur intermédiaire (6, 6a) et **en ce que** le produit conduit vers la colonne de séparation (14) est comprimé.

14. Installation selon l'une quelconque des revendications 10 à 13, **caractérisée en ce qu'**une dérivation (25) qui débouche dans la zone de réaction distillative/réactive (2a) de la colonne de réaction (1a) est raccordée à l'évacuation de fond de colonne (24) de la colonne de séparation (14).
